(19) Europäisches Patentamt European Patent Office Office européen des brevets

(11) **EP 4 538 960 A1**

(12) **EUROPEAN PATENT APPLICATION**

(43) Date of publication:
**16.04.2025 Bulletin 2025/16**

(21) Application number: **23203427.2**

(22) Date of filing: **13.10.2023**

(51) International Patent Classification (IPC):
**G06T 5/50** (2006.01) **G06T 7/30** (2017.01)
**H04N 5/272** (2006.01) **G06T 19/00** (2011.01)
**G02B 27/01** (2006.01)

(52) Cooperative Patent Classification (CPC):
**G06T 7/30; G06T 5/50; H04N 5/2628; H04N 5/265;**
G02B 2027/014; G06T 19/006; G06T 2207/20221

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventor: **VAREKAMP, Christiaan**
**5656AG Eindhoven (NL)**

(74) Representative: **Philips Intellectual Property & Standards**
**High Tech Campus 52**
**5656 AG Eindhoven (NL)**

(54) **IMPROVING QUALITY OF IMAGES WITH DISPLAYS**

(57) A method of generating combined images for subsequent display on a device, the method comprising obtaining an image of a scene, detecting a display displaying content in the image and determining a geometry of the display in the image. The image of the scene is analyzed to identify and obtain source content corresponding to the content displayed on the display. Transformed source content is then generated by transforming the source content based on the geometry of the display. Thus, a combined image with the transformed source content and the image can be generated, where the combined image comprises the transformed source content blended with, or replacing, at least a portion of the display in the image.

Fig.4

Processed by Luminess, 75001 PARIS (FR)

EP 4 538 960 A1

**Description**

FIELD OF THE INVENTION

The invention relates to the field of imaging. In particular, the invention relates to the field of imaging scenes with displays. The invention also relates to the field of passthrough imaging with mixed-reality capable headsets.

BACKGROUND OF THE INVENTION

Images and videos of scenes which include displays (e.g., TVs, computer monitors, phone displays, screens etc.) can often exhibit visual artifacts for various reasons. For example, moire patterns may appear in the display in the image due to a mismatch between the pixel grid of the display in the image and the pixel grid of the display used to display the image. Flickering or rolling may also occur due to differences in the display's refresh rate and the camera's capture rate, glare/reflections may occur on the display and the content on the display may appear blurry or pixelated if the image's resolution is relatively low relative to the source content displayed on the display.

As such, when capturing images/videos of a scene including a display, high quality cameras need to be used and it is important to consider which artifacts may occur when adjusting the camera settings to improve image quality. Additionally, environmental factors may need to be considered to reduce glare/reflections on the screen.

One particularly problematic case occurs during passthrough imaging for mixed-reality capable headsets. These headsets will often have cameras which they use to image the scene in front of the headset and relay the captured content in real time to the user wearing the headset.

Due to constraints in the size of headsets (i.e., they need to be worn by the user) and the real-time nature of passthrough content, it is difficult to provide high quality passthrough images/video which reduces artifacts on displays.

Thus, there is a need to improve the provision of images with displays. Additionally, there is a need to improve passthrough content with displays for mixed-reality capable headsets.

SUMMARY OF THE INVENTION

The invention is defined by the claims.

According to examples in accordance with an aspect of the invention, there is provided a method of generating combined images for subsequent display on a device, the method comprising:

obtaining an image of a scene;
detecting a display displaying content in the image;
determining a geometry of the display in the image;
analyzing the image of the scene to identify source content corresponding to the content displayed on the display;
obtaining the source content corresponding to the content displayed on the display;
generating transformed source content by transforming the source content based on the geometry of the display; and
generating a combined image with the transformed source content and the image, wherein the combined image comprises the transformed source content blended with, or replacing, at least a portion of the display in the image.

Images and videos of content on displays often appear to have a much lower quality than in reality. This can occur because the resolution at which the image/video was obtained is relatively low compared to the resolution of the display, resulting in the local resolution of the display in the image being much lower than the resolution of the display itself.

Another reason may be that the capture rate of the camera is not synchronized with the frame rate of the display, resulting in tearing of the content on the display as it is being imaged. The dynamic range of the content in the image may also be lower than the original dynamic range of the source content due to limitations of the camera used to obtain the image.

Thus, it is proposed to analyze the image to identify the source content being displayed on the display and combine the image with the source content. This results in a combination where the source content is overlayed on the display such that the content on the display can be displayed at a higher resolution.

The source content is transformed by using the geometry of the display, which can be obtained from the image. The geometry of the display may comprise four corner points of the display and/or edge lines of the display.

In many cases, it can be assumed that the local quality of the content in the image will be lower than the quality of the source content.

It will be appreciated that not all of the content on the display needs to be overlayed with the source content. For example, if the content comprises static text and an image/video, it is possible to only overlay the source content for the image/video and not have to overlay the original source content for the static text. This may involve determining the geometry of the image/video within the display.

One method for obtaining the source content may be to directly stream a capture of the display to the device. Another option may be to analyze the content and obtain said content from a network to which the device is connected (e.g., a website).

The method may further comprise displaying the combined image on the device.

The method may further comprise determining a portion of the source content displayed on the display in the image of the scene, wherein generating transformed source content comprises transforming said portion of the source content based on the geometry of the display.

In some cases, the content displayed on the display may be a portion of the whole source content (e.g., a portion of a website). Thus, it may be preferable to have a combined image where the same portion of source content is used to match the image to the combination.

The method further comprises determining a local quality score for the content in the image, wherein generating the transformed source content and generating the combined image is based on the local quality score being below a local quality threshold.

In some cases, the combination may only be needed when the local quality of the content in the image is below a threshold. For example, the local quality may be a local resolution of the display in the image and the local quality threshold may be a threshold resolution. In another example, the local quality score may be indicative of tearing and the local quality threshold may be indicative of, for example, no tearing or a minimum amount of tearing.

The method may further comprise obtaining a quality score for the source content, wherein the local quality threshold is based on said quality score.

The local quality threshold may be based on the quality score for the source content. For example, the quality score for the source content may be a quality score assigned to the source content when transformed using the geometry of the display. The local quality score could then be set to equal the quality score of the source content. Thus, the combination is displayed when using the source content would provide a better quality than the original image including the display.

In an example, the local resolution of the device for the display can be determined based on the geometry of the device. In other words, the number of pixels available on the device to display the display can be determined. For example, the device may have a 4K display and the local resolution of the device for the display would the proportion of the pixels which the display in the image covers. Thus, the local quality threshold may be based on the local resolution of the device for the display.

Detecting the display in the image may comprise applying a segmentation algorithm to the image to detect the display.

Segmentation algorithms, such as Mask-RCNN or YOLO, can be used to detect and identify displays in an image.

Detecting the display may comprise detecting the corner points of the display (excluding bezels) and/or detecting the lines corresponding to the edges of the display.

Analyzing the image to identify the source content corresponding to the content displayed on the display may comprise comparing the content to a plurality of source content on a network to which the device is connected.

The device may be connected to a network having multiple source content (e.g., images, videos, websites etc.). Thus, the device can compare the content displayed on the display to the content it has access to in the network to identify the source content. Preferably, the display is also connected to the same network.

If more than one source content is identified, each corresponding to the content displayed on the display, the source content with the best quality (e.g., higher resolution) can be used for the combination.

Analyzing the image to identify the source content corresponding to the content displayed on the display may comprise identifying a code in the image indicative of where the source content is stored, wherein the code is used to obtain the source content corresponding to the content displayed on the display.

For example, a QR code on the bezel of the display can point towards where the source content is stored. This is particularly advantageous for displays displaying known content over time. The QR code may also point to a location (e.g., in a network) in which a screen capture of the display is being stored.

Determining a geometry of the display may comprise obtaining a geometric model of the display. Transforming the source content may comprise fitting the geometric model to the display in the image and mapping the source content to the fitted geometric model.

For example, the display may be a curved display. Knowledge of the brand/type/size/aspect ratio of the display monitor (e.g., via the QR code) may be used to determine a non-linear transform after the plane perspective mapping to account for the curve in the display. Alternatively, if brand/type/size/aspect ratio of display monitor is not known, the curve parameters of the display may be fitted using the image and the retrieved source signal.

The method may further comprise controlling one or more of the display and the device to temporally synchronize the content displayed on the display and the transformed source content, wherein controlling one or more of the display and the headset comprises estimating a time shift between the content displayed on the display in the image of the scene and the transformed source content and temporally synchronizing the content displayed on the display and the transformed source content by adapting a time at which the content is displayed on the display and/or a time at which the transformed source content used to generate the combined image.

When the content being displayed is a video, or a user is interacting with the screen over time, the content on the display can change over time. In these cases, a time shift between the content in the image and the source content can be determined and used to temporally synchronize the content and the transformed source content.

The device may be a mixed reality capable headset, MR headset, and the image may be a passthrough image obtained with cameras on the MR headset.

It has been realized that there is currently a mismatch in resolution between the displays on mixed reality capable headsets and the cameras on said headsets used for passthrough imaging. This mismatch has to do with the low latency requirements associated with the transfer of the data from the cameras to the display. As such, the displays on current headsets can display content at a higher resolution than the cameras can provide in real time.

To avoid apparent motion blur, the headset's cameras also need to use a short integration time. This in turn means that it is difficult to achieve a sufficient dynamic range for realistic looking augmented or mixed reality applications.

This means that, if a mixed reality headset is used in scenes where a display (e.g., a computer monitor) is present, the captured passthrough image of the display will also suffer a degradation of resolution and dynamic range.

However, it has been realized that the original source content that is shown on the display can be made available. Thus, it is proposed that, if a display is present in the field of view of the headset, this specific region of the passthrough image can hence be replaced by the original source content thereby enabling a local increase in the resolution and dynamic range of said content.

The MR capable headset comprises two displays, one for each eye, and cameras used to capture the passthrough image.

The invention also provides a computer program carrier comprising computer program code which, when executed on a computer, causes the computer to perform all of the steps according to any of the afore-mentioned methods.

The invention also provides a system for generating combined images for subsequent display on a device, the system comprising a processor configured to:

  obtain an image of a scene;
  detect a display displaying content in the image;
  determine a geometry of the display in the image;
  analyze the image of the scene to identify source content corresponding to the content displayed on the display;
  obtain the source content corresponding to the content displayed on the display;
  generate transformed source content by transforming the source content based on the geometry of the display; and
  generating a combined image with the transformed source content and the image, wherein the combined image comprises the transformed source content blended with, or replacing, at least a portion of the display in the image.

The processor may be further configured to determine a portion of the source content displayed on the display in the image of the scene, wherein generating transformed source content comprises transforming said portion of the source content based on the geometry of the display.

The processor may be further configured to determine a local quality score for the content in the image, wherein generating the transformed source content and generating the combined image is based on the local quality score being below a local quality threshold.

The processor may be further configured to obtain a quality score for the source content, wherein the local quality threshold is based on said quality score.

It will be appreciated that the processor of the system may be further configured to perform all of the steps according to any of the afore-mentioned methods.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

  Fig. 1 illustrates an image of a scene with a display placed on a table;
  Fig. 2 illustrates a method for determining the geometry of the display;
  Fig. 3 illustrates a passthrough scene from an augmented reality (AR) headset; and
  Fig. 4 shows a method of generating combined images for subsequent display on a device.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method of generating combined images for subsequent display on a device, the method comprising obtaining an image of a scene, detecting a display displaying content in the image and determining a geometry of the display in the image. The image of the scene is analyzed to identify and obtain source content corresponding to the content displayed on the display. Transformed source content is then generated by transforming the source content based on the geometry of the display. Thus, a combined image with the transformed source content and the image can be generated, where the combined image comprises the transformed source content blended with, or replacing, at least a portion of the display in the image.

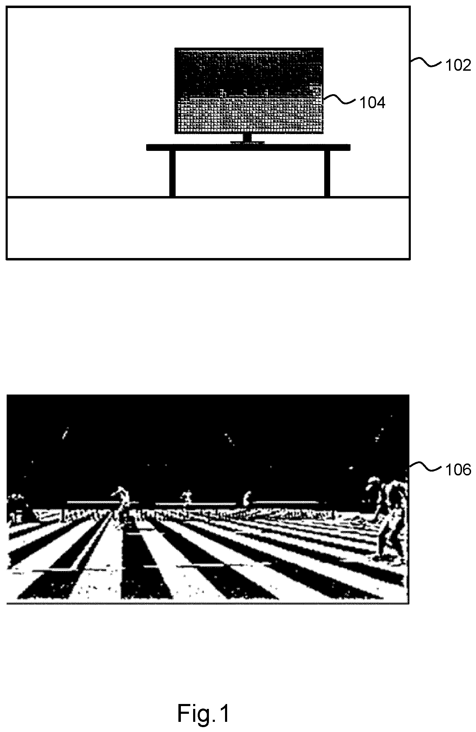

Fig. 1 illustrates image 102 of a scene with a display 104 placed on a table. In many cases, the local quality of the content displayed on the display 104 in the image 102 will be lower than the quality of the original source content received by the display.

The display may be a television, a screen or a monitor. Of course, any type of display may be used.

For example, if the image 102 has a conventional resolution of 1920 x 1080, the content on the display 104 in the image 102 may have a much lower local resolution as only a portion of the pixels of the image 102 are used to display the content on the display 104. In contrast, the resolution at which the source content 106 is displayed on the display 104 may have a higher resolution (e.g., 1920 x 1080, 3840 x 2160 etc.).

Similarly, the local quality of the content in the image 102 may have a lower dynamic range compared to the dynamic range of the source content 106. Additionally, visual artefacts may appear in the content in the image 102 caused by differences in the capture rate of the camera and the refresh rate of the display 104.

The lower local quality of the content in the image 102, relative to the source content 106, is usually caused by the relatively low quality at which cameras can capture the scene relative to the perceived quality at which the human eye can see the scene.

For example, the relatively low resolution at which the image 102 is captured by the camera can cause the content to have a low local resolution. Similarly, a relatively short integration time used by the camera can cause the content to have a low dynamic range relative to the source content 106. Additionally, when the content displayed is a video, artifacts in the image 102 can occur when the image 102 is captured between frames of the video.

Thus, it is proposed to blend the source content 106 with the image 102 to generate a combined image such that the source content on the display 104 in the combined image has a higher local quality than the content originally displayed in the image 102.

It is noted that the term "content" herein will generally refer to the content of the display as seen in the original image (e.g., image 102) whereas the term "source content" will refer to the source content which is displayed on the display (e.g., source content 106).

In order to generate the combined image, the display 104 in the image is detected. A neural network such as Mark-RCNN can be used for detection and segmentation of displays in an image. After segmentation of the display, the interior image region corresponding to the display can be mapped to a reference rectangle for flat displays.

The image can then be matched to sources on the network to determine which source content is being shown on display. The corresponding source content, when found, can then be used to improve the local quality by blending it into the original image to generate a combined image.

In an example, the display may contain a QR code on the display bezel to identify the source content that is associated with the display. For example, a monitor may always be used to show a certain imaging modality in a medical setting. Thus, the QR code can be used to identify the imaging modality. The QR code may also point towards a network address (e.g., a website address) where the source content is stored. Thus, the source content can be retrieved and used to improve the local quality of the content in the image.

Of course, the QR code (or other type of code) does not need to be on the display bezel. In some cases, it may be possible to have the QR code near the display such that when an image captures the display, the QR code is also captured. Multiple QR codes throughout the scene could be used to ensure the QR code is captured. It is also possible to display the QR code on the display by, for example, superimposing it on top of the content.

Another method for identifying the source content may involve analyzing the region of the image corresponding to the content of the display. For example, the content may be compared to a set of source images/videos on a network. The matching source content can thus be selected.

It is noted that an image may be a frame of a video. In the context of videos, the source content is preferably added to each frame of a video.

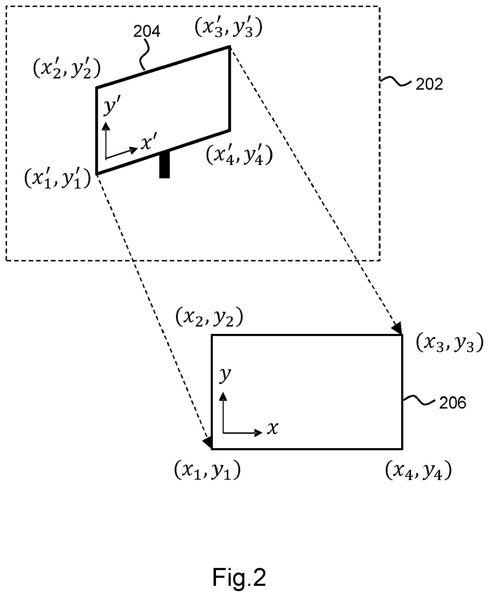

Fig. 2 illustrates a method for determining the geometry of the display.

When the display is a planar flat surface, the original video source can be mapped onto the image using a plane perspective mapping. The concept of a plane projective mapping (so called homography) is frequently used in the field of computer vision. For example, the well-known OpenCV computer vision library provides an introduction to the estimation of plane projective mapping parameters.

Fig. 2 shows how plane projective parameter estimation can be used to determine a mapping from the display region 204 in the image 202, as observed after projective mapping, to a plane 206 with a pre-determined resolution corresponding to the source content. The display region 204 can be defined in an image coordinate system and the plane 206 can be defined in an arbitrary coordinate system (e.g., origin at one of the corners of the plane).

Note that the source resolution is typically full high-definition video (width = 1920, height = 1080) or 4K video (width = 3840, height = 2160).

A homography can be used to provide a transformation between the display region 204 and a plane 206 corresponding to the source content. The transformation can be estimated by the matrix equation:

$$x' = Hx \rightarrow \begin{bmatrix} x' \\ y' \\ 1 \end{bmatrix} = \begin{bmatrix} h_{11} & h_{12} & h_{13} \\ h_{21} & h_{22} & h_{23} \\ h_{31} & h_{32} & h_{33} \end{bmatrix} \begin{bmatrix} x \\ y \\ 1 \end{bmatrix} \tag{1}$$

where $x'$ is a 2D projective coordinate in the image space, $x$ is a 2D projective coordinate in the space of the plane 206 and $H$ is the homography transformation with nine parameters.

The parameters of the homography can be estimated from the four corner point positions of the display region detected in the image $[(x'_1, y'_1), (x'_2, y'_2), (x'_3, y'_3), (x'_4, y'_4)]$ and the four corner point positions defined by the source image size $[(x_1, y_1), (x_2, y_2), (x_3, y_3), (x_4, y_4)]$. Earlier work (e.g., see R. Collins "Lecture 16: Planar Homographies" CSE486, Penn State) has shown that given the corner points, the homography parameters can be solved using the following linear system of equations:

$$\begin{bmatrix} x_1 & y_1 & 1 & 0 & 0 & 0 & -x_1x'_1 & -y_1x'_1 \\ 0 & 0 & 0 & x_1 & y_1 & 1 & -x_1y'_1 & -y_1y'_1 \\ x_2 & y_2 & 1 & 0 & 0 & 0 & -x_2x'_2 & -y_2x'_2 \\ 0 & 0 & 0 & x_2 & y_2 & 1 & -x_2y'_2 & -y_2y'_2 \\ x_3 & y_3 & 1 & 0 & 0 & 0 & -x_3x'_3 & -y_3x'_3 \\ 0 & 0 & 0 & x_3 & y_3 & 1 & -x_3y'_3 & -y_3y'_3 \\ x_4 & y_4 & 1 & 0 & 0 & 0 & -x_4x'_4 & -y_4x'_4 \\ 0 & 0 & 0 & x_4 & y_4 & 1 & -x_4y'_4 & -y_4y'_4 \end{bmatrix} \begin{bmatrix} h_{11} \\ h_{12} \\ h_{13} \\ h_{21} \\ h_{22} \\ h_{23} \\ h_{31} \\ h_{31} \end{bmatrix} = \begin{bmatrix} x'_1 \\ y'_1 \\ x'_2 \\ y'_2 \\ x'_3 \\ y'_3 \\ x'_4 \\ y'_4 \end{bmatrix} \tag{2}$$

It is noted that only eight of the parameters need to be solved for as, often, one of the parameters (usually $h_{33}$) is enforced to $h_{33} = 1$ or $H$ is normalized such that $\|H\| = 1$. Equation (2) above is built with $h_{33} = 1$ enforced.

Once the homography parameters are known, the source content can be geometrically transformed (warped) and blended with the input image to form the final image using the following spatial mapping:

$$x' = \frac{h_{11}x + h_{12}y + h_{13}}{h_{31}x + h_{32}y + 1} \tag{3}$$

$$y' = \frac{h_{21}x + h_{22}y + h_{23}}{h_{31}x + h_{32}y + 1} \tag{4}$$

Blending can for example encompass alpha compositing where the color of pixels of the original image are each combined with the color of corresponding pixel(s) based on an alpha value $I_f = \alpha I_o + (1 - \alpha)I_{sc}$, where $I_f$ is the final combined image, $I_o$ is the original image and $I_{sc}$ is the source content. The blending is performed for the region of the original image corresponding to the content. Of course, the original content can be replaced with the source content by setting $\alpha = 0$.

It is possible that the display may also be curved. In these cases, more parameters may be needed to describe the geometric mapping. However, in any case, texture mapping can be performed by first fitting the geometric model (i.e., finding the transformation as described above) and then performing an inverse mapping from the target image back to the video source.

If the display is curved, it may be possible to use pre-determined knowledge of the display's shape (e.g., by detecting the type/model of display in the image) and using the pre-determined knowledge to adapt/deform the plane 206 to the known curved shape of the display. It is also possible to fit a curve to the curvature of the display in the image, transform the curve to the coordinate system of the plane 206 and adapt/deform the plane 206 to fit the transformed curve. The color values of the source content can then be fit to the deformed plane and then transformed to the image coordinate system.

Recently, virtual reality headsets have been produced that have passthrough to enable augmented reality and mixed reality. The headset is visually closed but has cameras on the outside from which the video can be shown on the displays for each eye.

Both the resolution of camera sensors and the resolution of the headsets displays is gradually increasing. However, both are nowhere near the resolution that the human eye can observe.

There is currently a mismatch in resolution between the eye displays and the cameras. This mismatch has to do with the low latency requirement associated with the transfer of the data from the cameras to the displays. Currently, the displays can therefore visualize a higher resolution than the cameras can provide.

To avoid apparent motion judder, the cameras also need to use a short integration time. This in turn means that it is difficult to achieve a sufficient dynamic range for realistic looking augmented or mixed reality applications.

As such, if a mixed reality headset is used in scenes where a computer monitor (or other display) is present, the captured image of the monitor will also suffer a degradation of resolution and dynamic range. Thus, the concepts provided herein enable an improved mixed reality experience by improving the local quality of displays captured during passthrough.

In particular, the original image/video (i.e., the source content) that is shown on the monitor can be made available to the headset. If a monitor is present in the field of view of the headset, this specific region of the camera image can hence be replaced by the original video thereby locally increasing the resolution and dynamic range.

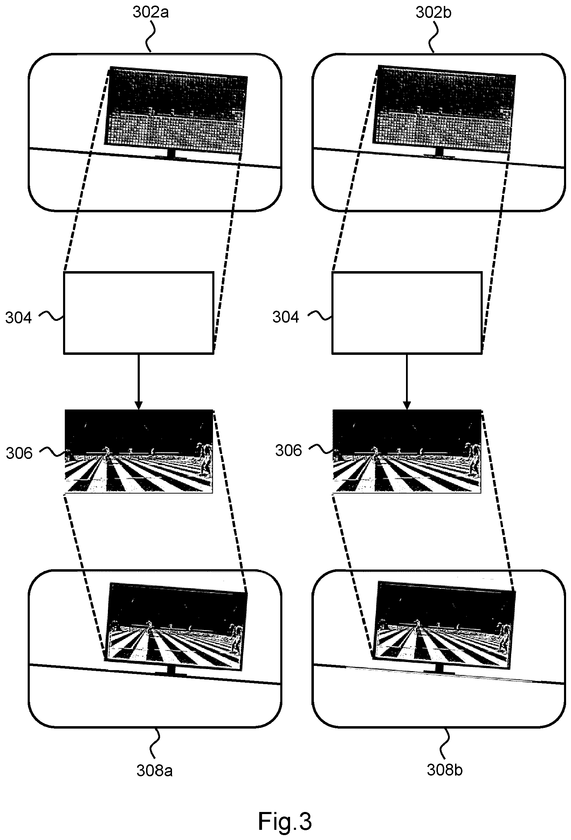

Fig. 3 illustrates a passthrough scene from an augmented reality (AR) headset being adapted. Via the headset's integrated cameras, the viewer observes a computer monitor displaying a video. For each frame of the passthrough scene, the headset obtains two frames 302a and 302b from different viewpoints to enable stereo viewing of the passthrough scene.

The observed resolution and dynamic range of the content in the monitor suffer from the quality mismatch between cameras and display. As a result, the viewer may have difficulty reading text on the monitor or viewing smaller details in the displayed content. To solve this, the original source video 306 that has high resolution and dynamic range is retrieved (e.g., via the network) and placed in the viewport regions that corresponds to the display interior using a geometric mapping (e.g., homography).

As explained above, this can be achieved by finding four corner points of the monitor in the images 302a and 302b, determining (for each image) the transformation to a plane 304 corresponding to the source video 306 and then using the inverse of the transformation on the source video 306 to generate the combined images 308a and 308b.

Of course, it will be appreciated that the concepts provided herein can generally be used with mixed reality (MR) capable devices. Note that a normal smartphone can be used as an MR device as it contains a front-facing camera and a display.

When displaying video, due to network delay differences, the source video retrieved from the network and the video shown on the monitor will typically be out of sync. Depending on the application, this may or may not be a problem. For example, for real-time applications (e.g., passthrough content), it may be preferable for the content on the display and the source content on the combined images/frames to be temporally synchronized.

If the device used to generate the combined images has control over both the video shown on the monitor and the source video retrieved for the quality improvement, then a temporal synchronization step can always be applied. An image correlation measure can be calculated to estimate the time shift.

Similarly, the content on the display may only be a portion of the source content (e.g., a portion of a website). Image correlation can also be used to spatially synchronize the content on the display and the source content.

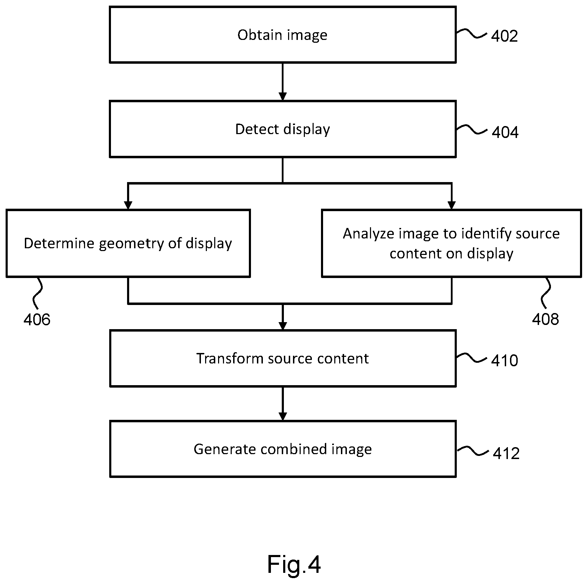

Fig. 4 shows a method of generating combined images for subsequent display on a device. An image of a scene is obtained is step 402. The image may be obtained from camera on the device or from separate cameras. For example, for mixed-reality capable headsets, the image may be obtained from a camera on the headset. A display is detected in the image in step 404, where the display is displaying content. Known segmentation and/or detection algorithms can be used for the detection.

A geometry of the display in the image is determined in step 406. For example, this may comprise determining the region of the image occupied by the display, determining the coordinates of the four corner points of the display, determining the four edge lines of the display and/or determining a geometric model of the display (e.g., for curved screens).

The image of the scene is analyzed in step 408 to identify source content corresponding to the content displayed on the display. This may comprise, for example, identifying a QR code (or other indication/code) in the image which signals what the source content being displayed on the display is. The region of the image corresponding to the display can also be compared to a library/set of source content (e.g., on a network) to identify the source content. The source content can thus be obtained.

Transformed source content is generated by transforming the source content based on the geometry of the display in step 410. For example, a homography can be used to transform the source content as explained above.

A combined image is then generated in step 412 with the transformed source content and the image. The combined image comprises the transformed source content blended with, or replacing, at least a portion of the display in the image. It will be appreciated that not all of the content being displayed on the display may need to be replaced/blended.

Any method described herein may be computer-implemented, where computer-implemented means that the steps of said methods are performed by one or more computers and where a computer is defined as a device suitable for processing data. A computer may be suitable for processing data according to prescribed instructions.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

The computer program carrier may comprise computer memory (e.g., random-access memory) and/or computer storage (e.g., hard drives, solid-state drives etc.). The computer program carrier may be a bitstream carrying the computer program code.

A computer program code may be stored/distributed on a suitable medium, such as an optical storage medium or a solid-state medium supplied together with or as part of other hardware, but may also be distributed in other forms, such as via the Internet or other wired or wireless telecommunication systems.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

Any methods described herein exclude a method for performing mental acts as such.

## Claims

**1.** A computer-implemented method of generating combined images for subsequent display on a device, the method comprising:

obtaining an image of a scene;
detecting a display displaying content in the image;

determining a geometry of the display in the image;

analyzing the image of the scene to identify source content corresponding to the content displayed on the display;

obtaining the source content corresponding to the content displayed on the display;

generating transformed source content by transforming the source content based on the geometry of the display; and

generating a combined image with the transformed source content and the image, wherein the combined image comprises the transformed source content blended with, or replacing, at least a portion of the display in the image.

2. The method of claim 1, further comprising determining a portion of the source content displayed on the display in the image of the scene, wherein generating transformed source content comprises transforming said portion of the source content based on the geometry of the display.

3. The method of claims 1 or 2, further comprising determining a local quality score for the content in the image, wherein generating the transformed source content and generating the combined image is based on the local quality score being below a local quality threshold.

4. The method of claim 3, further comprising obtaining a quality score for the source content, wherein the local quality threshold is based on said quality score.

5. The method of any of claims 1 to 4, wherein detecting the display in the image comprises applying a segmentation algorithm to the image to detect the display.

6. The method of any of claims 1 to 5, wherein analyzing the image to identify the source content corresponding to the content displayed on the display comprises comparing the content to a plurality of source content on a network to which the device is connected.

7. The method of any of claims 1 to 6, wherein analyzing the image to identify the source content corresponding to the content displayed on the display comprises identifying a code in the image indicative of where the source content is stored, wherein the code is used to obtain the source content corresponding to the content displayed on the display.

8. The method of any of claims 1 to 7, wherein:

determining a geometry of the display comprises obtaining a geometric model of the display; and

transforming the source content comprises fitting the geometric model to the display in the image and mapping the source content to the fitted geometric model.

9. The method of any of claims 1 to 8, further comprising controlling one or more of the display and the device to temporally synchronize the content displayed on the display and the transformed source content, wherein controlling one or more of the display and the headset comprises:

estimating a time shift between the content displayed on the display in the image of the scene and the transformed source content; and

temporally synchronizing the content displayed on the display and the transformed source content by adapting a time at which the content is displayed on the display and/or a time at which the transformed source content used to generate the combined image.

10. The method of any of claims 1 to 9, wherein the device is a mixed reality capable headset, MR headset, and the image is a passthrough image obtained with cameras on the MR headset.

11. A computer program carrier comprising computer program code which, when executed on a computer, causes the computer to perform all of the steps according to any of claims 1 to 10.

12. A system for generating combined images for subsequent display on a device, the system comprising a processor configured to:

obtain an image of a scene;

detect a display displaying content in the image;

determine a geometry of the display in the image;

analyze the image of the scene to identify source content corresponding to the content displayed on the display;

obtain the source content corresponding to the content displayed on the display;

generate transformed source content by transforming the source content based on the geometry of the display; and

generating a combined image with the transformed source content and the image, wherein the combined image comprises the transformed source content blended with, or replacing, at least a portion of the display in the image.

13. The system of claim 12, wherein the processor is further configured to determine a portion of the source content displayed on the display in the image of the scene, wherein generating transformed source content comprises transforming said portion of the source content based on the geometry of the display.

14. The system of claims 12 or 13, wherein the processor is further configured to determine a local quality score for the content in the image, wherein generating the transformed source content and generating the combined image is based on the local quality score being below a local quality threshold.

15. The system of claim 14, wherein the processor is further configured to obtain a quality score for the source content, wherein the local quality threshold is based on said quality score.

~102

~104

~106

Fig.1

$(x_3', y_3')$

204

$(x_2', y_2')$

202

$y'$

$x'$

$(x_4', y_4')$

$(x_1', y_1')$

$(x_2, y_2)$

$(x_3, y_3)$

$y$

$x$

206

$(x_1, y_1)$

$(x_4, y_4)$

Fig.2

302a

302b

304

304

306

306

308a

308b

Fig.3

```
┌─────────────────────────────────────────┐
│              Obtain image                 │ ⌇ 402
└─────────────────────────────────────────┘
                    │
                    ▼
┌─────────────────────────────────────────┐
│             Detect display                │ ⌇ 404
└─────────────────────────────────────────┘
         │                        │
         ▼                        ▼
┌──────────────────────┐  ┌──────────────────────────┐
│ Determine geometry   │  │ Analyze image to identify │
│ of display           │  │ source content on display │
└──────────────────────┘  └──────────────────────────┘
         ⌇                           ⌇
        406                         408
                    │
                    ▼
┌─────────────────────────────────────────┐
│          Transform source content         │ ⌇ 410
└─────────────────────────────────────────┘
                    │
                    ▼
┌─────────────────────────────────────────┐
│          Generate combined image          │ ⌇ 412
└─────────────────────────────────────────┘
```

Fig.4

Europäisches
Patentamt

European
Patent Office

Office européen
des brevets

# EUROPEAN SEARCH REPORT

Application Number

EP 23 20 3427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 286 922 B1 (KONINKLIJKE KPN NV [NL]; TNO [NL]) 10 June 2020 (2020-06-10)<br>* the whole document *<br>----- | 1-15 | INV.<br>G06T5/50<br>G06T7/30<br>H04N5/272<br><br>ADD.<br>G06T19/00<br>G02B27/01 |

**TECHNICAL FIELDS SEARCHED (IPC)**

G06T
G02B
H04N

The present search report has been drawn up for all claims

| Place of search | Date of completion of the search | Examiner |
|---|---|---|
| Munich | 8 April 2024 | Wu, Zifeng |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 20 3427**

This annex lists the patent family members relating to the patent documents cited in the above-mentioned European search report.
The members are as contained in the European Patent Office EDP file on
The European Patent Office is in no way liable for these particulars which are merely given for the purpose of information.

**08-04-2024**

| Patent document cited in search report | | Publication date | Patent family member(s) | | Publication date |
|---|---|---|---|---|---|
| EP 3286922 | B1 | 10-06-2020 | CN | 107534797 A | 02-01-2018 |
| | | | EP | 3286922 A1 | 28-02-2018 |
| | | | US | 2018091860 A1 | 29-03-2018 |
| | | | WO | 2016170123 A1 | 27-10-2016 |

EPO FORM P0459

For more details about this annex : see Official Journal of the European Patent Office, No. 12/82